# EUROPEAN PATENT APPLICATION

(11) **EP 4 550 432 A1**
(43) Date of publication of application: **07.05.2025**
(21) Application number: 24170277.8
(22) Date of filing: 15.04.2024
(51) Int. Cl.: H01M 4/04, H01M 4/139

(54) **NOTCHING DEVICE AND BATTERY ELECTRODE AND BATTERY MODULE MANUFACTURED BY NOTCHING DEVICE**

(30) Priority: 30.10.2023 KR 20230146426
(71) Applicant: Samsung SDI Co., Ltd., Yongin-si, Gyeonggi-do 17084 (KR)
(72) Inventor: JI, Hyeong Min, 16678 Suwon-si (KR)
(74) Representative: Marks & Clerk LLP

(57) **Abstract**

Disclosed in an example embodiment is a notching device includes a die configured to support an electrode, a first stripper which moves toward the die and presses a mixture portion of the electrode, a second stripper which moves toward the die and presses an uncoated portion of the electrode, and a pattern portion which moves toward the die and forms a pattern on the uncoated portion.

## Description

### BACKGROUND

### 1. Field

The present disclosure relates to a notching device and a battery electrode and a battery module which are manufactured by the notching device.

### 2. Discussion of Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

A secondary battery includes an electrode assembly including a pair of electrodes, that is, a positive electrode and a negative electrode, and a separator interposed between the pair of electrodes. A secondary battery electrode includes, for example, an electrode plate including thin metal foil and an electrode active material applied and cured on one side surface or two side surfaces of the electrode plate.

In a secondary battery electrode, an area on which an electrode active material is not applied may be referred to as an uncoated portion, and an area on which an electrode active material is applied may be referred to as a mixture portion. In order to reduce a thickness of an electrode active material applied on an electrode plate, the electrode active material is rolled, and the rolled electrode active material is cured.

A secondary battery electrode is notched to form tabs, but the close contact of a welded portion between the tabs or a welded portion between the tab and a current collector may be reduced, and a welding area may be narrow, which may cause welding defects.

The above information disclosed in this Background section is provided for enhancement of understanding of the background of the present disclosure, and, therefore, it may contain information that does not constitute related or prior art.

### SUMMARY

The present disclosure is directed to providing a notching device in which a secondary battery electrode is notched to process an uncoated portion of the secondary battery electrode and form a tab on the secondary battery electrode, thereby increasing a welding area to improve weldability, and a battery electrode manufactured by the notching device.

These and other aspects and features of the present disclosure will be described in or will be apparent from the following description of some embodiments of the present disclosure.

According to an aspect of the present disclosure, there is provided a notching device including a die configured to support an electrode, a first stripper which moves (*e.g.* is configured to move) toward the die and presses (*e.g.* is configured to press) a mixture portion of the electrode, a second stripper which moves (*e*.*g*. is configured to move) toward the die and presses (*e*.*g*. is configured to press) an uncoated portion of the electrode, and a pattern portion which moves (*e*.*g*. is configured to move) toward the die and forms (*e.g.* is configured to form) a pattern on the uncoated portion.

The second stripper may be connected to the first stripper to interlock with the first stripper.

The pattern portion may be formed on (*e.g.* coupled to) the second stripper.

The pattern portion may be attachable to or detachable from the second stripper.

The pattern portion may include a pattern body assembled to (*e.g.* coupled to) the second stripper, and a pattern protrusion formed on (*e.g.* at) a lower portion of the pattern body and configured to form the pattern on the uncoated portion.

The pattern body may include a body insertion portion slidingly inserted (*e*.*g*. configured to be slidingly inserted) into a second groove formed in the second stripper, and a body base portion which is formed at the body insertion portion, is in close contact with a bottom surface of the second stripper, and has a lower portion on which the pattern protrusion is formed.

The second groove may include a second groove through-portion passing through a lower portion of the second stripper, and a second groove extension portion extending from the second groove through-portion to a bottom surface of the second stripper, and a width of the second groove through-portion may be formed to be greater than a width of the second groove extension portion.

The body insertion portion may include an insertion penetration portion inserted into (*e*.*g*. configured to be inserted into) the second groove through-portion to be supported in the second groove through-portion, and an insertion extension portion extending from the insertion penetration portion to be inserted into (*e*.*g*. configured to be inserted into) the second groove extension portion and connected to the body base portion.

The body insertion portion may further include an insertion guide portion mounted on the insertion penetration portion, and configured to guide the body base portion to come into close contact with the lower portion of the second stripper.

The insertion guide portion may include a variable guide portion which is mounted on a bottom surface of the insertion penetration portion and of which a length is variable (*e*.*g*. configured to be varied) by an elastic force, and a guide roller portion rotatably mounted on the variable guide portion, and movable along the second groove through-portion.

The pattern body may further include a body stopper portion mounted on the second stripper, and configured to restrict movement of the body base portion.

The body stopper portion may include a first stopper seated on an upper side of the second stripper, a second stopper which extends downward from the first stopper and restricts (*e*.*g*. is configured to restrict) movement of at least one of the body insertion portion and the body base portion, and a third stopper configured to fix the first stopper to the second stripper.

The pattern may have a concave-convex shape.

The notching device may further include a support portion formed on the die and configured to support the uncoated portion such that the pattern is formed on the uncoated portion.

According to another aspect of the present disclosure, there is provided a battery electrode manufactured by the notching device.

The battery electrode may include mixture portions which are pressed by the first stripper and on which an active material is applied, uncoated portions which extend from the mixture portions and are pressed by the second stripper and on which the active material is not applied, and area-increasing portions formed on the uncoated portions and pressed by the pattern portion to form a pattern.

The area-increasing portions may be formed at a portion of the uncoated portion to increase a contact area.

The area-increasing portions may have a concave-convex shape.

The plurality of mixture portions may be stacked, and the area-increasing portions provided on the uncoated portions extending from the mixture portions may be coupled to each other through welding.

According to still another aspect of the present disclosure, there is provided a battery module manufactured and including the battery electrode.

According to yet another aspect of the present disclosure, there are provided a battery pack manufactured using a battery with an improved structure, and a vehicle including the same.

At least some of the above and other features of the invention are set out in the claims.

In a notching device and a battery electrode manufactured by the notching device according to one or more embodiments of the present disclosure, a contact area and binding force between uncoated portions are increased through a pattern formed on the uncoated portions, thereby improving weldability thereof.

In a notching device and a battery electrode manufactured by the notching device according to one or more embodiments of the present disclosure, a pattern portion is attached to or detached from a second stripper to replace the pattern portion, thereby implementing patterns having various shapes.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic view illustrating a notching device according to one or more embodiments of the present disclosure;
FIG. 2 is a schematic view illustrating a state before a first stripper and a second stripper press an electrode according to one or more embodiments of the present disclosure;
FIG. 3 is a schematic view illustrating a state in which the first stripper and the second stripper in FIG. 2 interlock with each other to press the electrode;
FIG. 4 is a schematic view illustrating the second stripper according to one or more embodiments of the present disclosure;
FIG. 5 is a schematic view illustrating a pattern portion according to one or more embodiments of the present disclosure;
FIG. 6 is a schematic view illustrating a state in which the pattern portion is assembled to the second stripper according to one or more embodiments of the present disclosure;
FIG. 7 is a schematic view illustrating a state in which an insertion guide portion is added to a body insertion portion and the pattern portion is in close contact with the second stripper according to one or more embodiments of the present invention;
FIG. 8 is a schematic view illustrating the insertion guide portion according to one or more embodiments of the present disclosure;
FIG. 9 is a schematic view illustrating a state in which a body stopper portion restricts the movement of a body base portion according to one or more embodiments of the present disclosure;
FIG. 10 is a schematic view illustrating a pattern formed on an uncoated portion by the pattern portion according to one or more embodiments of the present disclosure;
FIG. 11 is a schematic view illustrating a support portion according to one or more embodiments of the present disclosure;
FIG. 12 is a schematic view illustrating a battery electrode manufactured by a notching device according to one or more embodiments of the present disclosure;
FIG. 13 is a schematic view illustrating a battery module manufactured by a notching device according to one or more embodiments of the present disclosure;
FIG. 14 is a schematic view illustrating a coupling state between uncoated portions in FIG. 13; and
FIG. 15 is a schematic view illustrating a coupling between an uncoated portion and an electrode tab in FIG. 13.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

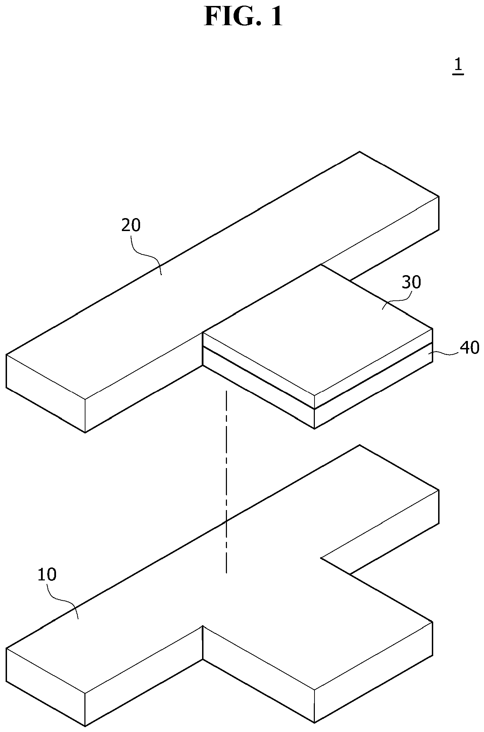

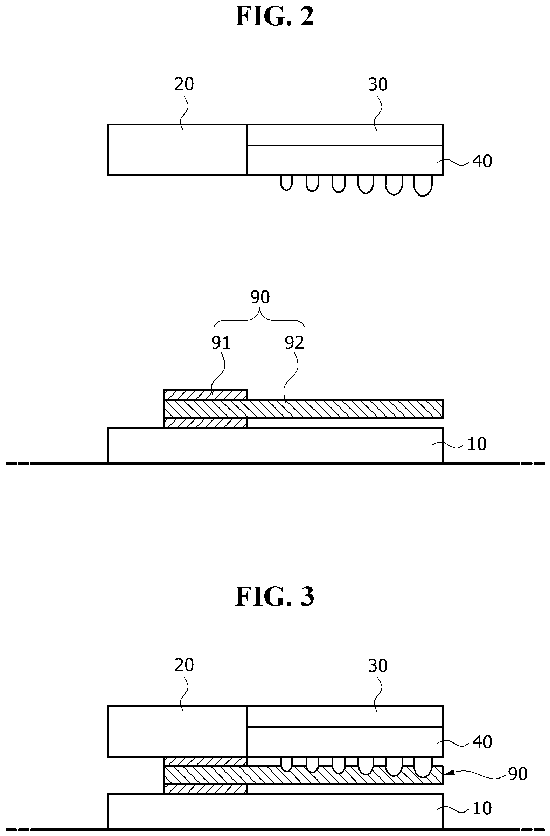

FIG. 1 is a schematic view illustrating a notching device according to one or more embodiments of the present disclosure. FIG. 2 is a schematic view illustrating a state before a first stripper and a second stripper press an electrode according to one or more embodiments of the present disclosure. FIG. 3 is a schematic view illustrating a state in which the first stripper and the second stripper in FIG. 2 interlock with each other to press the electrode. Referring to FIGS. 1 to 3, a notching device 1 according to one or more embodiments of the present disclosure includes a die 10, a first stripper 20, a second stripper 30, and a pattern portion 40. The notching device 1 may notch and process a battery electrode 90 including a mixture portion 91 and an uncoated portion 92. The mixture portion 91 may be formed by applying an active material layer on two side surfaces or one side surface of the battery electrode 90.

The die 10 may support the battery electrode 90. The die 10 may have a flat upper side such that the battery electrode 90 may be seated thereon. Punch holes recessed to be stepped may be formed around the die 10, and a notching process may be performed to punch and remove a portion of the uncoated portion 92.

The first stripper 20 may move toward the die 10 and may press the mixture portion 91 of the battery electrode 90. The first stripper 20 may be disposed above the die 10 and may be vertically moved by a separate lifter. When the first stripper 20 lowers and presses the mixture portion 91, the mixture portion 91 may be fixed by the die 10 and the first stripper 20.

The second stripper 30 may move toward the die 10 and may press the uncoated portion 92 of the battery electrode 90. The second stripper 30 may be disposed above the die 10 and may be vertically moved by a separate lifter. In one or more embodiments, a plurality of wrinkles formed during rolling and curing processes of an active material may be distributed on the uncoated portion 92 before notching, and the wrinkles may be removed by the second stripper 30.

The pattern portion 40 may move toward the die 10 and may form a pattern on the uncoated portion 92. The pattern portion 40 may be formed integrally with the second stripper 30, or may be connected to the second stripper 30. The pattern portion 40 may interlock with the second stripper 30. Protrusions may be formed on the pattern portion 40 to form a concave-convex shape on the uncoated portion 92. The pattern of the uncoated portion 92 may improve weldability by expanding a contact area with the uncoated portion 92 during a welding process.

The second stripper 30 may interlock with the first stripper 20. The second stripper 30 may be coupled to a side surface of the first stripper 20. In one or more embodiments, the second stripper 30 may be formed integrally with the first stripper 20.

The pattern portion 40 may be formed on the second stripper 30. The second stripper 30 may have a block shape that presses the uncoated portion 92, and the pattern portion 40 may be formed on a portion of the second stripper 30. For example, the pattern portion 40 may be coupled to the second stripper 30 such that a pattern is formed by being limited to a welded area of the uncoated portion 92.

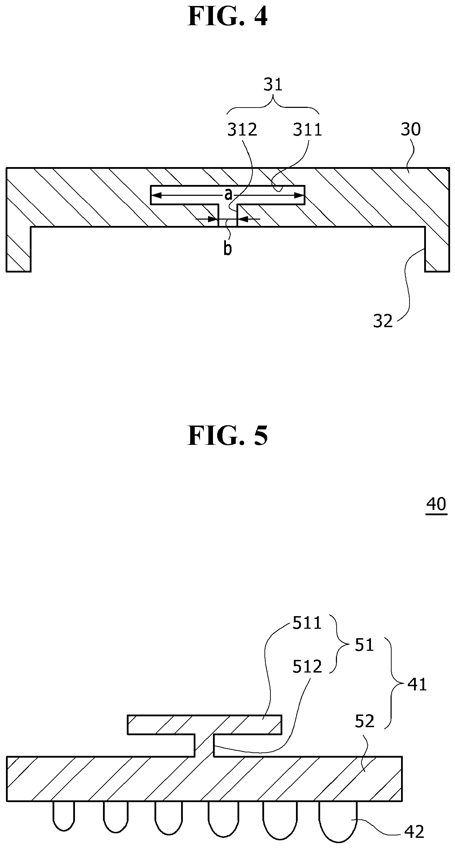

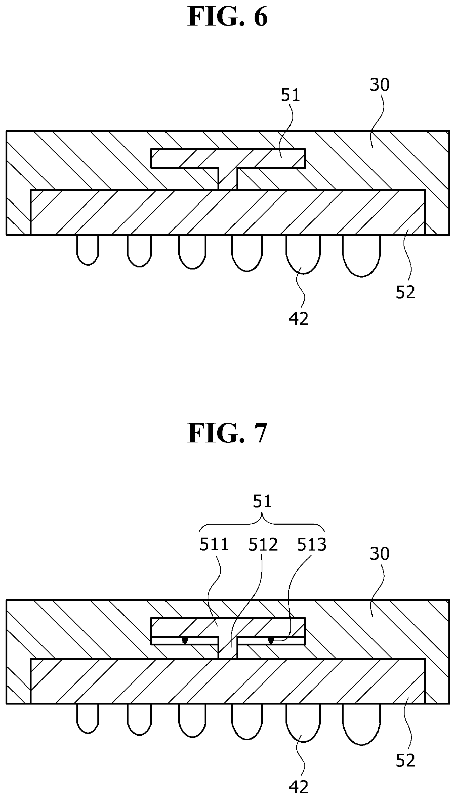

FIG. 4 is a schematic view illustrating the second stripper according to one or more embodiments of the present disclosure. FIG. 5 is a schematic view illustrating the pattern portion according to one or more embodiments of the present disclosure. FIG. 6 is a schematic view a state in which the pattern portion is assembled to the second stripper according to one or more embodiments of the present disclosure. Referring to FIGS. 4 to 6, the pattern portion 40 may be attachable to or detachable from the second stripper 30. That is, the pattern portion 40 may be selectively assembled to the second stripper 30 to form the uncoated portion 92 having various patterns during a notching process for the battery electrode 90.

The pattern portion 40 may include a pattern body 41 and pattern protrusions 42. The pattern body 41 may be assembled to the second stripper 30. When the pattern body 41 is assembled to the second stripper 30, a bottom surface of the second stripper 30 and a bottom surface of the pattern body 41 may be disposed collinearly, and the pattern protrusions 42 may protrude downward from the bottom surface of the second stripper 30.

The pattern body 41 may include a body insertion portion 51 and a body base portion 52. The body insertion portion 51 may be slidably inserted into a second groove 31 formed in the second stripper 30. The body base portion 52 may be formed at the body insertion portion 51 and may be in close contact with the bottom surface of the second stripper 30, and the pattern protrusions 42 may be formed at a lower portion thereof. The body base portion 52 may be connected to a lower portion of the body insertion portion 51.

The second groove 31 formed in the second stripper 30 may include a second groove through-portion 311 and a second groove extension portion 312. The second groove through-portion 311 may form a space passing through the second stripper 30 in a horizontal direction. The second groove through-portion 311 may have a rectangular shape with a cross section that is laterally long. The second groove extension portion 312 may extend from the second groove through-portion 311 to the bottom surface of the second stripper 30 to be exposed to the outside. The second groove extension portion 312 may have a rectangular shape of which a length is vertically long. A width a of the second groove through-portion 311 may be formed to be greater than a width b of the second groove extension portion 312.

The second stripper 30 may further include a second mounting portion 32. The second mounting portion 32 may be formed at a lower portion of the second stripper 30 to provide a space for inserting the body base portion 52. The second mounting portion 32 may have a shape of a groove or hole formed in the lower portion of the second stripper 30 to communicate with the second groove extension portion 312. When the body base portion 52 is inserted into the second mounting portion 32, a bottom surface of the body base portion 52 and the bottom surface of the second stripper 30 may be disposed collinearly. Thus, the second stripper 30 may press the uncoated portion 92, and the pattern portion 40 assembled to the second stripper 30 may form a pattern on a portion of the uncoated portion 92. In one or more embodiments, the second mounting portion 32 may be omitted in the second stripper 30, and the pattern portion 40 assembled to the second stripper 30 may form a pattern on the entirety of the uncoated portion 92.

The body insertion portion 51 may include an insertion penetration portion 511 and an insertion extension portion 512. The insertion penetration portion 511 may be inserted into the second groove through-portion 311 to be supported on the second groove through-portion 311. The insertion penetration portion 511 may have a shape corresponding to the second groove through-portion 311 or may be formed to have a smaller cross-sectional area than the second groove through-portion 311 to slide along the second groove through-portion 311. The insertion extension portion 512 may extend from the insertion penetration portion 511 and may be inserted into the second groove extension portion 312. A lower end of the insertion extension portion 512 may be connected to the body base portion 52.

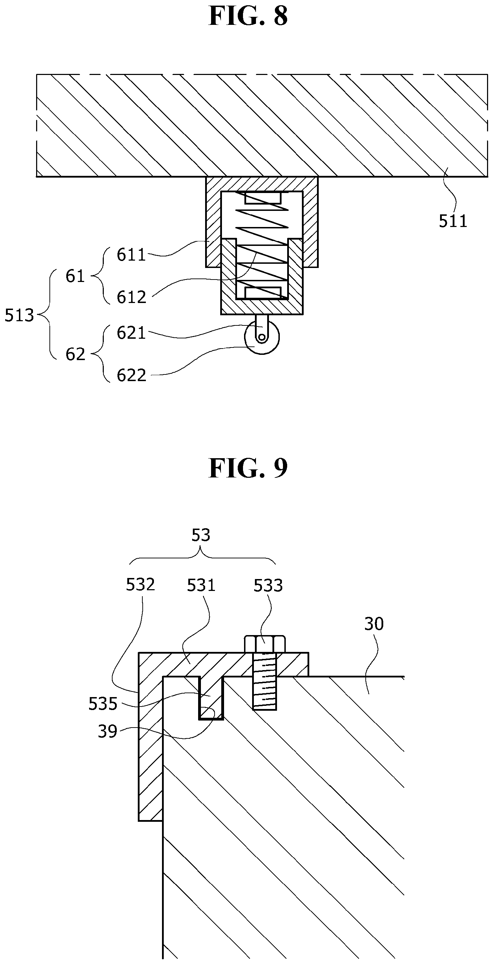

FIG. 7 is a schematic view illustrating a state in which an insertion guide portion is added to the body insertion portion and the pattern portion is in close contact with the second stripper according to one or more embodiments of the present disclosure. FIG. 8 is a schematic view illustrating the insertion guide portion according to one or more embodiments of the present disclosure. Referring to FIGS. 7 and 8, the body insertion portion 51 according to one or more embodiments of the present disclosure may further include an insertion guide portion 513.

The insertion guide portion 513 may be mounted on the insertion penetration portion 511 and may guide the body base portion 52 to come into close contact with the lower portion of the second stripper 30. An upper surface of the body base portion 52 and a lower surface of the second stripper 30 may be brought into close contact with each other by the insertion guide portion 513, thereby preventing the movement of the pattern body 41 due to a design error.

The insertion guide portion 513 may include a variable guide portion 61 and a guide roller portion 62. The variable guide portion 61 may include a pair of variable cases 611 vertically disposed to face each other, and a variable elastic portion 612 that connects the variable cases 611 and of which a length is variable by a spring force. The variable guide portion 61 may be mounted on a bottom surface of the insertion penetration portion 511. The guide roller portion 62 may be rotatably mounted on the variable guide portion 61 and may be moved along the second groove through-portion 311. The guide roller portion 62 may include a roller support 621 mounted on a lower portion of the variable guide portion 61, and a roller rotating portion 622 rotatably mounted on the roller support 621. The roller rotating portion 622 may be seated in the second groove through-portion 311 and may be rotated while coming into contact with the second groove through-portion 311. In one or more embodiments, the guide roller portion 62 may be a ball bearing rotatably mounted on a bottom surface of the variable guide portion 61. In one or more embodiments, the guide roller portion 62 may be mounted at an upper side of the insertion penetration portion 511 and may be in contact with an upper portion of the second groove through-portion 311.

FIG. 9 is a schematic view illustrating a state in which a body stopper portion restricts the movement of the body base portion according to one or more embodiments of the present disclosure. Referring to FIG. 9, the pattern body 41 according to one or more embodiments of the present disclosure may further include a body stopper portion 53.

The body stopper portion 53 may be mounted on the second stripper 30 and may restrict the movement of the body base portion 52. The body stopper portion 53 may be coupled to a side end of at least one of the body insertion portion 51 and the body base portion 52 and may restrict the movement of the pattern body 41 when the pattern body 41 reaches an operation position.

For example, the body stopper portion 53 may include a first stopper 531, a second stopper 532, and a third stopper 533.

The first stopper 531 may be seated on an upper side of the second stripper 30. A first stopper protrusion 535 may protrude from a lower portion of the first stopper 531. The first stopper protrusion 535 may be inserted into a locking groove 39 formed in the upper side of the second stripper 30 and may maintain a fixed state.

The second stopper 532 may extend downward from the first stopper 531 and may restrict the movement of at least one of the body insertion portion 51 and the body base portion 52. The second stopper 532 may be coupled directly to the pattern body 41 or may be formed integrally with the pattern body 41. In one or more embodiments, the second stopper 532 may be in close contact with the pattern body 41 to restrict the movement of the pattern body 41.

The third stopper 533 may fix the first stopper 531 to the second stripper 30. The third stopper 533 may be a bolt that passes through the first stopper 531 to be fixed to the second stripper 30. In one or more embodiments, the third stopper 533 may be one of various fixing portions for fixing the first stopper 531 to the second stripper 30.

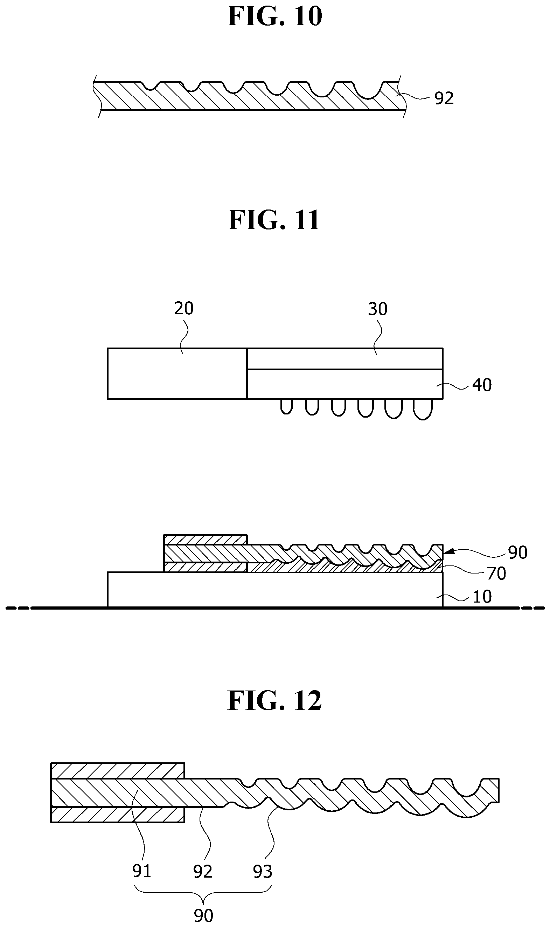

FIG. 10 is a schematic view illustrating a pattern formed on the uncoated portion by the pattern portion according to one or more embodiments of the present disclosure. Referring to FIG. 10, the pattern formed on the uncoated portion 92 by the pattern portion 40 may have a concave-convex shape. The pattern may expand a contact area with respect to a welded (e.g. welding) area to increase a bonding force by welding. That is, when a concave-convex shape is enlarged in an area in which close contact between the uncoated portions 92 is difficult, a contact area and adhesion between the uncoated portions 92 may be increased, thereby improving welding quality. A concave-convex pattern may be variously designed in a pyramid shape, a hemisphere shape, a triangle shape, or the like. In one or more embodiments, the size or shape of a concave-convex portion may be designed to be the same or different for each area of the uncoated portion 92. In one or more embodiments, a pattern may be omitted in a non-welded area of the uncoated portion 92. In the pattern protrusions 42, only a plurality of protrusions may be formed, or protrusions and recesses may be alternately disposed.

FIG. 11 is a schematic view illustrating a support portion according to one or more embodiments of the present disclosure. Referring to FIG. 11, the notching device 1 according to one or more embodiments of the present disclosure may further include a support portion 70. The support portion 70 may be formed on the die 10 and may support the uncoated portion 92 such that a pattern is formed on the uncoated portion 92. The support portion 70 may be assembled to the die 10 facing the pattern portion 40. Protrusions and recesses corresponding to the pattern protrusions 42 may be formed on the support portion 70 to support the uncoated portion 92 such that protrusions and recessions having a concave-convex shape are stably formed on the uncoated portion 92. Meanwhile, since a mounting structure of the support portion 70 corresponds to a mounting structure of the pattern portion 40, a detailed description thereof will be omitted.

FIG. 12 is a schematic view illustrating a battery electrode manufactured by a notching device according to one or more embodiments of the present disclosure. Referring to FIG. 12, a battery electrode 90 may be manufactured using the notching device 1 according to one or more embodiments of the present disclosure described above. That is, an active material may be applied on the battery electrode 90 that is not notched, and the battery electrode 90 may be supplied to the notching device 1 in a state of being partitioned into a mixture portion 91 and an uncoated portion 92.

When the unnotched electrode 90 is supplied between a die 10 and a first stripper 20 of the notching device 1, the first stripper 20 and the second stripper 30 interlock with each other to move toward the die 10 and press the mixture portion 91 and the uncoated portion 92, and an unnecessary area of the uncoated portion 92 is punched and removed.

In this case, a pattern portion 40 is assembled to the second stripper 30, and a notching process is performed so that the pattern portion 40 forms a pattern in a welded area of the uncoated portion 92. The pattern forms concave-convex portions and grooves in the uncoated portion 92 to increase a contact area between the uncoated portions 92 overlapping each other during welding of the uncoated portions 92, thereby improving a bonding force by welding.

The battery electrode 90 according to one or more embodiments of the present disclosure may include the mixture portion 91, the uncoated portion 92, and an area-increasing portion 93.

The mixture portion 91 may be pressed by the first stripper 20, and an active material may be applied thereon. The uncoated portion 92 extending from the mixture portion 91 may be pressed by the second stripper 30. The area-increasing portion 93 formed on the uncoated portion 92 may be pressed by the pattern portion 40 to form a pattern.

A pattern may be formed on a portion of the uncoated portion 92 so that the area-increasing portion 93 may increase a contact area. The area-increasing portion 93 may have a concave-convex shape and may be transformed into various shapes to increase a contact area.

If necessary, a plurality of battery electrodes 90 may be stacked. In this case, the mixture portions 91 may be stacked, and the uncoated portions 92 extending from the mixture portions 91 may be disposed to face each other. The area-increasing portions 93 provided on the uncoated portions 92 may be coupled to each other through welding when the uncoated portions 92 come into contact with each other.

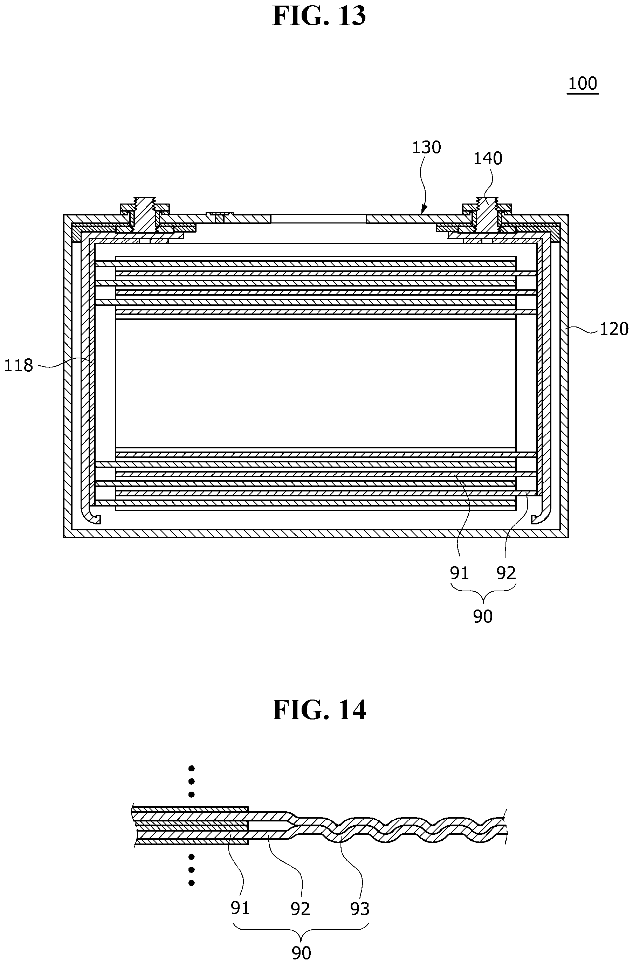

FIG. 13 is a schematic view illustrating a battery module manufactured by a notching device according to one or more embodiments of the present disclosure. Referring to FIG. 13, a battery module 100 may be manufactured by including a battery electrode 90 manufactured by the notching device 1 according to one or more embodiments of the present disclosure described above.

That is, a plurality of battery electrodes 90 may be divided into positive electrodes and negative electrodes and stacked or wound, and a separator may be placed between the positive electrode and the negative electrode. In this case, the positive electrode and the negative electrode and the separator disposed between the positive electrode and the negative electrode may form an electrode assembly.

The battery electrode 90 may be embedded in a case 120. The case 120 may form the overall exterior of the battery module 100 and may be made of a conductive metal such as aluminium, aluminium alloy, or nickel-plated steel. In one or more embodiments, the case 120 may have an open upper side, and may provide a space in which the battery electrode 90 is accommodated.

A cap cover 130 may cover an open area of the case 120. The cap cover 130 may be coupled to an upper side of the case 120, and may cover the open area of the case 120. The cap cover 130 in contact with the case 120 may be made of a conductive material.

A terminal 140 may pass through the cap cover 130 to be assembled to the cap cover 130. The terminal 140 may be connected to the battery electrode 90. The terminal 140 may pass through the cap cover 130, a lower portion thereof may be embedded in the case 120, and may be in contact with the battery electrode 90, and an upper portion thereof may protrude outward from the case 120. An electrode tab 118 connected to the battery electrode 90 may be in contact with the terminal 140.

FIG. 14 is a schematic view illustrating a coupling state between uncoated portions in FIG. 13. Referring to FIG. 14, a plurality of battery electrodes 90 may be stacked or wound, and uncoated portions 92 formed in each battery electrode 90 may be in surface contact with each other. In one or more embodiments, area-increasing portions 93 formed on the uncoated portions 92 may be welded in a state of being in surface contact with each other. The area-increasing portion 93 may have a concave-convex shape to increase a contact area for welding so that a bonding force by welding may be increased. A plurality of uncoated portions 92 may be coupled to each other and welded to an electrode tab 118 in the same manner. In this case, the electrode tab 118 may also have a shape corresponding to the area-increasing portion 93.

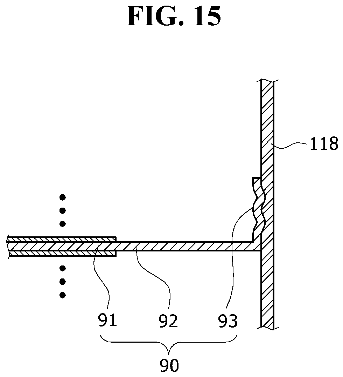

FIG. 15 is a schematic view illustrating a coupling between an uncoated portion and an electrode tab in FIG. 13. Referring to FIG. 15, a plurality of battery electrodes 90 may be stacked or wound, and an uncoated portion 92 formed in each battery electrode 90 may be disposed to face an electrode tab 118. In this case, since the electrode tab 118 has a shape corresponding to the area-increasing portion 93, the area-increasing portion 93 provided in each uncoated portion 92 may be welded in a state of surface contact with the electrode tab 118. The area-increasing portion 93 may have a concave-convex shape to increase a contact area for welding so that a bonding force by welding may be increased.

In a notching device 1 and a battery electrode 90 manufactured by the notching device 1 according to one or more embodiments of the present disclosure, a first stripper 20 and a die 10 can press a mixture portion 91, and a second stripper 30 and the die 10 can press an uncoated portion 92, so that a pattern portion 40 can form a pattern on the uncoated portion 92 during a notching process.

In a notching device 1 and a battery electrode 90 manufactured by the notching device 1 according to one or more embodiments of the present disclosure, a contact area and binding force between uncoated portions 92 are increased through a pattern formed on the uncoated portions 92, thereby improving weldability thereof.

In a notching device 1 and a battery electrode 90 manufactured by the notching device 1 according to one or more embodiments of the present disclosure, a pattern portion 40 is attached to or detached from a second stripper 30 to replace the pattern portion 40, thereby implementing patterns having various shapes.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

## Claims

1. A notching device comprising:
a die configured to support an electrode;
a first stripper which is configured to move toward the die and configured to press a mixture portion of the electrode;
a second stripper which is configured to move toward the die and configured to press an uncoated portion of the electrode; and
a pattern portion which is configured to move toward the die and configured to form a pattern on the uncoated portion.

2. The notching device of claim 1, wherein the second stripper is connected to the first stripper to interlock with the first stripper.

3. The notching device of claim 1 or claim 2, wherein the pattern portion is formed on the second stripper.

4. The notching device of any one of claims 1 to 3, wherein the pattern portion is attachable to or detachable from the second stripper.

5. The notching device of claim 4, wherein the pattern portion comprises:
a pattern body assembled to the second stripper; and
a pattern protrusion formed on a lower portion of the pattern body and configured to form the pattern on the uncoated portion.

6. The notching device of claim 5, wherein the pattern body comprises:
a body insertion portion slidingly inserted into a second groove formed in the second stripper; and
a body base portion which is formed at the body insertion portion, is in close contact with a bottom surface of the second stripper, and has a lower portion on which the pattern protrusion is formed.

7. The notching device of claim 6, wherein the second groove comprises:
a second groove through-portion passing through a lower portion of the second stripper; and
a second groove extension portion extending from the second groove through-portion to a bottom surface of the second stripper, and
wherein a width of the second groove through-portion is formed to be greater than a width of the second groove extension portion.

8. The notching device of claim 7, wherein the body insertion portion comprises:
an insertion penetration portion inserted into the second groove through-portion to be supported in the second groove through-portion; and
an insertion extension portion extending from the insertion penetration portion to be inserted into the second groove extension portion and connected to the body base portion.

9. The notching device of claim 8, wherein the body insertion portion further comprises an insertion guide portion mounted on the insertion penetration portion and configured to guide the body base portion to come into close contact with the lower portion of the second stripper.

10. The notching device of claim 9, wherein the insertion guide portion comprises:
a variable guide portion which is mounted on a bottom surface of the insertion penetration portion and of which a length is variable by an elastic force; and
a guide roller portion rotatably mounted on the variable guide portion and movable along the second groove through-portion.

11. The notching device of any one of claims 6 to 10, wherein the pattern body further comprises a body stopper portion mounted on the second stripper and configured to restrict movement of the body base portion.

12. The notching device of any one of claims 1 to 11, further comprising a support portion formed on the die and configured to support the uncoated portion such that the pattern is formed on the uncoated portion.

13. A battery electrode manufactured by the notching device of any one of claims 1 to 12.

14. The battery electrode of claim 13, wherein the battery electrode comprises:
mixture portions which are pressed by the first stripper and on which an active material is applied;
uncoated portions which extend from the mixture portions and are pressed by the second stripper and on which the active material is not applied; and
area-increasing portions formed on the uncoated portions and pressed by the pattern portion to form a pattern.

15. A battery module comprising the battery electrode of claim 13 or claim 14.
